# EUROPEAN PATENT SPECIFICATION

(11) **EP 3 425 774 B1**
(45) Date of publication and mention of the grant of the patent: **18.12.2019**
(21) Application number: 17465527.4
(22) Date of filing: 05.07.2017
(51) Int. Cl.: H02K 3/52, H01F 5/04, H01F 41/10

(54) **METHOD FOR ELECTRICALLY CONNECTING A WIRE ELEMENT OF A STATOR WITH A CARRIER ELEMENT AND STATOR CONTROL SYSTEM**
VERFAHREN ZUR ELEKTRISCHEN VERBINDUNG EINES DRAHTELEMENTS EINES STATORS MIT EINEM TRÄGERELEMENT UND STATORSTEUERUNGSSYSTEM
PROCÉDÉ POUR CONNECTER ÉLECTRIQUEMENT UN ÉLÉMENT FILAIRE D'UN STATOR À UN ÉLÉMENT DE SUPPORT ET SYSTÈME DE COMMANDE DE STATOR

(43) Date of publication of application: 09.01.2019
(73) Proprietor: Continental Automotive GmbH, 30165 Hannover (DE)
(72) Inventor: Aronet, Vlad, 325300 Bocsa, Caras-Severin (RO)

(56) References cited:
- DE-A1- 2 019 910
- US-A1- 2013 257 183

## Description

The invention is concerned with a method for electrically connecting a wire element of a stator with a carrier element. The invention is further concerned with a stator control system comprising a stator and a carrier element.

A stator designed for an electrical machine usually comprises a hollow-shaped cylindrical body designed to house a rotor capable of rotating around itself within the cylindrical body of the stator. The rotation of the rotor is driven by an electromagnetic field that is created within the body of the stator by a set of electromagnetic coils arranged within the stator. For this, at least one wire of the electromagnetic coils has to be wired around the body of the stator, wherein the at least one wire usually comprises a beginning and an ending section where an electrical contact to an electric power source has to be made in order to provide an electric current to the electromagnetic coils.

In order to create the electrical contact, it is known to connect the wire of the stator for example to a contact ring by either welding or soldering the beginning or ending section of the wire extending outwards the stator to the contact ring. The contact ring can comprise a connector or an adapter where the contact ring can be connected to the electric power source. Additionally, the stator can be indirectly connected to a printed circuit board by connecting the printed circuit board to the contact ring. However, the process of connecting the stator to either the contact ring or the printed circuit board requires many intermediate steps and many electrical components. A stator connected to a printed circuit board results in being relatively large and therefore unpractical to be built into small designs, such as into actuators. Relevant state of the art is discussed in US 2013/257183 A1 disclosing a method for electrically connecting a wire element according to the preamble of claim 1, and in DE 2019910 A1.

It is therefore an object of the present invention to provide a method for electrically connecting a wire element of a stator with either a contact ring or a printed circuit board using a reduced number of steps, which results in a compact design of the stator with the contact ring or with the printed circuit board.

The object is accomplished by the subject matter of the independent claims. Advantageous developments with convenient and non-trivial further embodiments of the invention are specified in the following description, the dependent claims and the figures.

The invention is based on the realization that a combination of a stator with a contact ring or a combination of a stator with a printed circuit board is the most space-saving when the contact ring or the printed circuit board is directly placed on the stator such that a contact area between stator and contact ring or stator and printed circuit board is maximized and the overall volume of the respective combination is minimized. The contact ring is usually used as a supporting element for an adapter such that a part of a wire element of the stator can be electrically connected via the contact ring to another electrical component that can be connected to the adapter of the contact ring. A printed circuit board is generally known to be connected to a stator in order to direct and control an electric flow within the wire element of the stator. In this way, an electromagnetic field created by the wire element within the stator can be controlled and modified. In the following the contact ring and the printed circuit board are each denoted as a carrier element.

In known manner the wire element is wired around a body of the stator such that the wire element forms in parts at least one electromagnetic coil. The stator body exhibits for example a cylindrical shape. Several so-called stator teeth can be arranged along a circumferential direction of the stator body. The wire element can be wired around the teeth such that an electromagnetic coil is formed at each tooth. When the at least one electromagnetic coil is supplied with an electric current, an electromagnetic field is created within the stator. The wire element can form a continuous loop. Alternatively, the wire element can comprise a beginning and an ending section that can be overlaid after the wiring around the body of the stator is finished.

The carrier element comprises at least one electric component which supplies the at least one electromagnetic coil with the electric current when an electrical contact is established between the at least one electric component and the wire element. For example, if the carrier element is designed as a contact ring, the at least one electric component can be designed as a plug connector. The at least one electric component can be designed for example as a capacitor or a resistor. The at least one electromagnetic coil is provided with the electric current when the wire element is electrically connected to the at least one electric component of the carrier element, given that the at least one electric component itself is supplied with the electric current.

The carrier element comprises at least one planar surface. For example, the carrier element can be flat in at least one spatial direction. The carrier element comprises at least one connection hole through the at least one planar surface. The at least one connection hole can go through the entirety of the flat-shaped side of the carrier element. The connection hole can be conductive. For example, the connection hole can be designed as a plated-through hole or as a so-called vertical interconnect access (via) . When the wire element is connected to the connection hole, the electrical contact can be established between the wire element and the connection hole. As a consequence, every electric component of the carrier element electrically connected to the connection hole is in electrical contact with the wire element.

According to the invention the wire element and the stator are at least partially covered by an overmolding such that the overmolding forms at least one planar surface. In other words, after the stator has been overmolded, at least one side of the stator comprises a flat exterior surface. For example, the planar surface is formed at a front side of the stator. After the stator has been overmolded, the wire element can be entirely covered by a combination of the stator and the overmolding, such that no direct access to the wire element can be made from an exterior side of the stator.

In order to connect the carrier element to the wire element of the stator, a hole is drilled through the overmolding in at least one predetermined location of the overmolding. The predetermined location is chosen such that the drilled hole goes through the wire element in at least one predetermined section of the wire element. The drilled hole forms a cavity on the surface of the overmolded stator that extends to the wire element. As a consequence, the wire element is at least partially disrupted in the at least one predetermined section. A potential flow of electric current through the wire element is interrupted because of the drilled hole. The wire element can also be completely cut through, in other words be entirely disrupted, because of the drilled cavity. The at least one cavity can form a blind hole or a stud hole. The at least one predetermined location on the overmolding can be determined such that the wire element is cut in a section of the wire element where it is not coiled. In other words, the predetermined section is chosen such that the at least one electromagnetic coil is not disrupted. For example, the at least one predetermined section is a section of the wire element in-between two stator teeth. The at least one cavity is drilled through the at least one planar surface of the overmolding. For example, the at least one cavity is drilled through the front side of the stator.

The carrier element with the at least one connection hole is positioned on the stator such that the at least one planar surface of the carrier element touches the at least one planar surface formed by the overmolding. At least one of the connection hole aligns with a cavity of the stator. Preferentially, the stator comprises a number of cavities equal to a number of connection holes of the carrier element that are designed to be connected with the wire element of the stator. The predetermined locations for drilling the cavities can be chosen such that when the carrier element is positioned on a surface of the stator, each cavity aligns with a corresponding connection hole. Preferentially, a diameter of the connection hole corresponds to a diameter of the cavity. The connection hole then overlays entirely the cavity.

Each of the at least one connection hole forms together with a corresponding cavity a cavity duct. According to the invention, each cavity duct is at least partially filled with an electrically conductive material. The cavity duct can also be entirely filled with the electrically conductive material. In sum, the electrical contact between the at least one electric component of the carrier element and the wire element in the at least one predetermined section is established. In other words, the electrically conductive material transmits the electricity applied on the connection hole to the wire element. The wire element is electrically connected again in the previously disrupted section. As a consequence, electricity can flow through the at least one electromagnetic coil and create an electromagnetic field.

The order of the steps according to the invention can be exchanged. For example, the carrier element can be first positioned on the overmolding of the stator and the at least one cavity can be drilled through the connection holes on the overmolding. In another example the at least one cavity can be drilled first and the carrier element can be positioned afterwards. The electrically conductive material can be first introduced into the cavity and then the carrier element can be positioned on the overmolding. In addition to the electrically conductive material, a fastening element like for example a screw can be used to attach the carrier element to the stator. Alternatively, the conductive material forms together a piece that not only conducts electricity from the carrier element into the wire element, but also attaches mechanically the carrier element to the stator.

The advantage of the method according to the invention is that the carrier element can be attached to the wire element of the stator by means of one single intermediate connecting piece, which can be formed by the electrically conductive material. The carrier element is directly in touch with the overmolding of the stator, such that the combination of the carrier element with the stator takes up a minimal space. For example, if the stator is combined with a printed circuit board, no intermediate contact ring is required anymore to electrically connect the printed circuit board to the stator. Therefore, the combination of stator and carrier element can be implemented into small electrical machines, for example into a pump. The stator can be produced in one single piece with the overmolding without loose parts of the wire element extending outwards of the overmolding. A production of the stator and/or the combination of the stator with the carrier element is therefore more flexible and therefore production costs can be minimized.

The invention also comprises optional embodiments that provide features which afford additional technical advantages.

According to an advantageous embodiment of the invention, the at least one electric component of the carrier element is designed to control a flow of the electric current through the at least one electromagnetic coil. In other words, the at least one electric component is designed to decide whether the electric current should flow through the connection hole to the wire element in the predetermined section or whether this flow should stop. The at least one electric component can also control an intensity of the current. The at least one electric component can be designed to control how electric current received from a power source can be distributed to the various connection holes of the carrier element, such that the at least one electric component controls a distribution of the electric current to the different predetermined sections of the wire element. In this way, the carrier element can control to which electromagnetic coil the electric current can be transferred. Therefore, the carrier element controls the electromagnetic field within the stator.

According to another advantageous embodiment of the invention, the wire element comprises at least two electromagnetic coils and the at least one predetermined section is selected in-between two of the at least two electromagnetic coils. In other words, the at least one cavity is drilled through the surface of the overmolding in such a way that the wire element of the stator is at least partially disrupted in an intermediate section where two electromagnetic coils connect. For example, the previously mentioned stator teeth holding the electromagnetic coils are spaced apart from each other with a spacing. The stator body exhibits a groove located in this spacing. The intermediate section of the wire element which connects the two electromagnetic coils is inserted in this groove. This intermediate section of the wire element can be then clearly identified when the stator and the wire element are covered by the overmolding. Consequently, when the cavity is drilled, one can be certain that the drilling disrupts the wire element in the intermediate section between two coils. Preferentially, a cavity is drilled in-between each coil such that subsequently the flow of current through each electromagnetic coil can be controlled individually by the carrier element. As a result, the electromagnetic field created by the electromagnetic coils inside the body of the stator can be precisely shaped and designed.

According to another advantageous embodiment of the invention, the electrically conductive material comprises an electrically conductive silicone. The cavity duct is filled entirely with the electrically conductive silicone. The electrically conductive silicone can be inserted in the at least one cavity first and the carrier element can be positioned afterwards on the overmolding of the stator. Additionally, further electrically conductive silicone can be inserted into the at least one connection hole of the carrier element such that electricity can be conducted from the connection hole to the wire element. Such an electrically conductive silicone is already commercially available, distributed for example by the company Shin-Etsu Silicone under the name KE-3492. The use of silicone is advantageous because it is flexibly applicable into the respective cavity duct. As a consequence, flexibility is allowed when drilling the cavity. A size and a dimension of the cavity and/or the cavity duct can vary without having an impact on the electrical conductivity realized by the electrically conductive silicone. The electrically conductive silicone can be in a fluid state when inserted into the cavity duct such that the cavity duct is entirely filled by the silicone without leaving a gap. This allows a fast and flexible production of the stator and of a stator/carrier element system.

According to another advantageous embodiment of the invention, the electrically conductive material comprises an electrically conductive rubber forming a connecting piece which connects the disrupted wire element with the connection hole of the carrier element. In other words, a connecting piece made of an electrically conductive rubber is inserted into the at least one cavity. The connecting piece can extend outwards the cavity of the stator and the carrier element can be positioned on the overmolding of the stator such that each connecting piece pierces through one connection hole of the carrier element. The cavity duct can be filled by both the electrically conductive silicone and the connecting piece formed by the electrically conductive rubber. Such an electrically conductive rubber is already commercially available, distributed for example by the company Holland Shielding under the name 5750-S. For example, a conductive filler is mixed into the rubber. The conductive filler can be for example Aluminum or Graphite. The advantage of using the electric conductive rubber is that a larger piece of the rubber can be cut into a smaller piece that precisely fits into the cavity duct. The size of the connecting piece made of the rubber can be adapted to a size of the drilled cavity. A shape of the cavity can take therefore any shape. Preferentially, the shape of the cavity is such that an electrical contact surface between the wire element and the connecting piece and/or between the connecting piece and connection hole is large.

According to another advantageous embodiment of the invention, the electrically conductive material is provided at least in part by a self-tapping screw which extends from the disrupted wire element to the connection hole of the carrier element. After the carrier element is positioned on the stator, the self-tapping screw can be screwed from the connection hole of the carrier element into the overmolding such that at least a screw tip of the screw is in contact with the wire element in the predetermined section. Preferentially, the self-tapping screw is screwed or drilled into the overmolding before the cavity in the overmolding is formed. In other words, the self-tapping screw forms the cavity in the overmolding the first time the screw is being screwed into the overmolding. Preferentially, the carrier element is connected to the wire element of the stator in one step as the screw is positioned through the connection hole of the carrier element and subsequently being screwed into the overmolding such that the screw at least partially disrupts the wire element in the predetermined section. The electrical contact is established then through the screw. This enables for a fast production of the stator/carrier element system.

Preferentially, the self-tapping screw features a press-fit connector onto which the connection hole of the carrier element is positioned. The press-fit connector can be located on an opposite side of the tip of the screw. The press-fit connector can be designed as a so-called press-fit pin. Preferentially, the self-tapping screw is screwed into the cavity of the overmolding of the stator such that the tip of the self-tapping screw connects the wire element in the disrupted section and such that the press-fit connector extends outwards the overmolding. The connection hole of the carrier element is then positioned onto the press-fit connector. This method features the advantage that the carrier element can be mounted subsequently to the stator. After construction of the stator/carrier element system the carrier element can be removed easily and exchanged with another carrier element. This facilitates keeping for example the printed circuit board up-to-date to the latest technology. This equally facilitates maintenance and/or repair of the carrier element, as it can be removed and put back onto the press-fit connector without removing the self-tapping screw.

According to another advantageous embodiment of the invention, the carrier element is designed as a printed circuit board. The printed circuit board can be designed to control an electric flow within the wire element of the stator. The printed circuit board can be designed to control which electromagnetic coil of the stator is being supplied with an electric current. In this way, an electromagnetic field created by the wire element within the stator can be controlled and modified by the printed circuit board.

According to another advantageous embodiment of the invention, the carrier element is designed as a contact ring that comprises at least one predefined contact element and a respective electric connection between one of the at least one connection hole and the contact element. For example, the contact element is designed as an electrical adapter.

The invention also relates to a stator control system that comprises the previously described stator and the previously described carrier element. The stator control system can be constructed by the combination of the stator with the contact ring. The stator control system can also be constructed by the combination of the stator with the printed circuit board.

The advantages described in regard to the method for electrically connecting a wire element of a stator with a carrier element according to the invention and its embodiments also apply correspondingly for the stator control system according to the invention.

In the following an exemplary implementation of the invention is described. The figures show:
- Fig. 1: a schematic illustration of a solely partially shown stator with a wire element forming electromagnetic coils;
- Fig. 2: a schematic illustration of the solely partially shown stator where the wire element is disrupted in a predetermined section;
- Fig. 3: a schematic illustration of the stator with an overmolding;
- Fig. 4: a schematic illustration of the stator with the overmolding comprising several cavities;
- Fig. 5: a schematic illustration of a close-up view of a cavity in the overmolding;
- Fig. 6: a schematic illustration of a close-up view of another cavity in the overmolding;
- Fig. 7: a schematic illustration of a stator control system comprising a stator and a printed circuit board;
- Fig. 8: a schematic illustration of a solely partially shown printed circuit board with a connection hole;
- Fig. 9: a schematic illustration of a sectional view of a cavity duct formed by the cavity of the overmolding of the stator and the connection hole of the printed circuit board;
- Fig. 10: a schematic illustration of a schematic illustration of a sectional view of the cavity duct filled with an electrically conductive material;
- Fig. 11: a schematic illustration of the stator where each cavity comprises a connecting piece made of an electrically conductive rubber;
- Fig. 12: a schematic illustration of a sectional view of the cavity duct filled with a self-tapping screw;
- Fig. 13: a schematic illustration of the stator control system comprising self-tapping screws;
- Fig. 14: a schematic illustration of a stator control system comprising a stator and a contact ring;
- Fig. 15: a schematic illustration of a self-tapping screw with a press-fit connector;
- Fig. 16: a schematic illustration of the stator where each cavity comprises a connecting piece formed by the self-tapping screw with a press-fit connector;
- Fig. 17: a schematic illustration of a sectional view of the cavity duct filled with the self-tapping screw with a press-fit connector; and
- Fig. 18: a schematic illustration of the stator control system comprising self-tapping screws with respective press-fit connectors.

The embodiments explained in the following are preferred embodiments of the invention. However, in the embodiments, the described components of the embodiments each represent individual features of the invention which are to be considered independently of each other and which each develop the invention also independently of each other and thereby are also to be regarded as a component of the invention in individual manner or in another than the shown combination. Furthermore, the described embodiments can also be supplemented by further features of the invention already described.

In the figures elements that provide the same function are marked with identical reference signs.

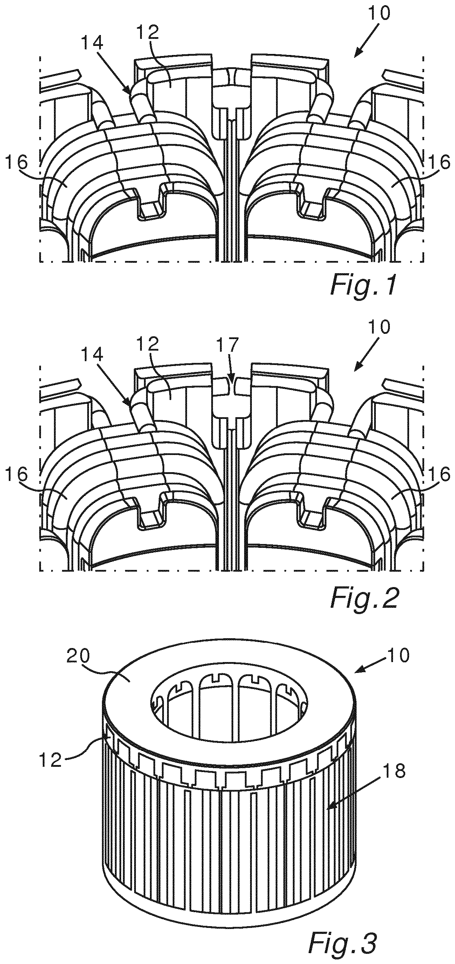

Fig. 1 shows a schematic illustration of a solely partially depicted stator 10, as it is known from prior art. The stator 10 comprises a stator body 12 that is designed to feature along its circumferential direction several stator teeth extending inwards the stator body 12 in a known manner. Here shown are two stator teeth. Around each teeth of the stator body 12 a wire element 14 is coiled in such a way that an electromagnetic coil 16 is formed by the wire element 14 at a respective stator tooth. A front side of the stator body 12 features several spikes separated from each other by a spacing. The wire element 14 is wired such that each spike holds a section of the wire element 14. At each spike, the section of the wire element 14 is connected at one end with an electromagnetic coil 16 and at the other end with a further section of the wire element 14 that is hold by another spike. Therefore, the wire element 14 goes through every second spacing in-between the spikes. In total, the wire element 14 can form a continuous loop within the stator 10. Alternatively, the wire element 14 can comprise a beginning section and an ending section which can be overlaid with each other.

As shown in Fig. 2, according to the invention, the wire element 14 is at least partially disrupted in at least one predetermined section 17. Here shown the wire element 14 is entirely disrupted in the predetermined section 17. The predetermined section 17 can be chosen such that the wire element 14 is disrupted in a section where the wire element 14 is in-between two spikes of the stator body 12. The wire element 14 can be disrupted in-between every second spike of the stator body 12. In this way, each electromagnetic coil 16 is electrically separated from the other electromagnetic coils 16 of the stator 10.

According to the invention, before disrupting the wire element 14 as shown for example in Fig. 2, the stator body 12 and the wire element 14 are first covered with an overmolding 18 as it is known from prior art. According to the prior art, the beginning and/or the ending section of the wire element 14 extend through the overmolding 18. However, according to the invention, the wire element 14 is entirely covered by either the overmolding 18 or the stator body 12, such that at first no external access to the wire element exists, as it is shown in Fig. 3. The overmolding 18 is such that a planar surface 20 is formed by the overmolding 18 at the front side of the stator 10. The spikes of the stator body 12 can be visible from an external point of view of the stator 10.

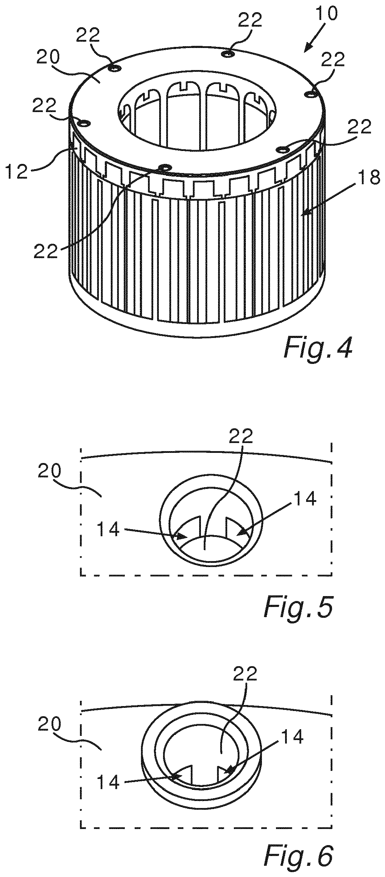

As shown in Fig. 4, several cavities 22 are drilled into the planar surface 20 of the overmolding 18 of the stator 10. Here are exemplary shown six cavities 22. The cavities 22 can be drilled such that the drilling goes through the wire element 14 in the predetermined sections 17 of the wire element 14 located in-between two spikes. This can be easily realized when the spikes of the stator body 12 are still visible after overmolding the stator 10. The cavities 22 can be round-shaped in a cross section of the cavity. Alternatively, the cross section of the cavities 22 can be rectangular-shaped. As shown in a close-up view of a cavity 22 in Fig. 5, the cavity 22 extends from the surface 20 of the overmolding 18 to at least the wire element 14 within the overmolding 18, such that the wire element 14 is at least partially disrupted in the predetermined section 17 shown in Fig. 2. Additionally, as shown in Fig. 6, the surface 20 of the overmolding 18 can comprise a dome-shaped elevation around a cavity 22.

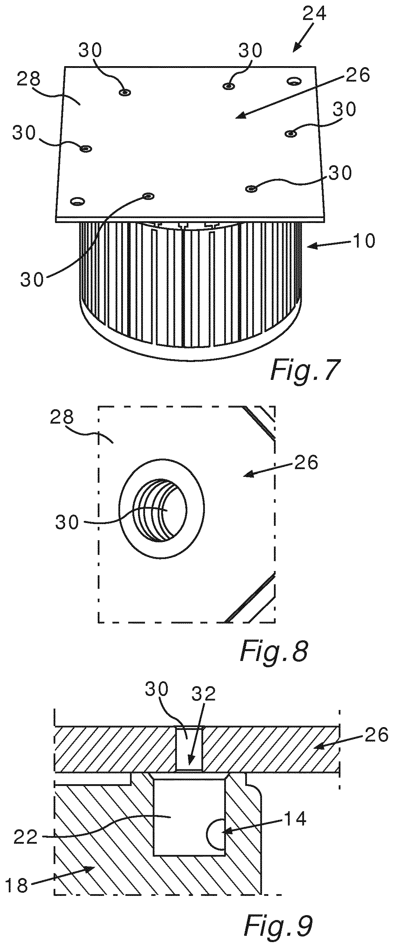

Fig. 7 shows a schematic illustration of a stator control system 24 comprising a stator 10 as described in Fig. 4 and a carrier element 26. As it is shown here the carrier element 26 is designed as a printed circuit board comprising at least one electrical component and at least one connection hole 30 for making an electrical contact with the at least one electrical component. The printed circuit board exhibits at least one planar surface 28. In known manner, the printed circuit board is flat-shaped and the at least one connection hole 30 extends through the flat-shaped surface 28, as can be seen in a close-up view of a connection hole 30 of the printed circuit board in Fig. 8. The printed circuit board is placed on the overmolding 18 of the stator 10 such that a maximal surface area of the printed circuit board is in touch with the surface of the overmolding 18. For example, the planar surface 28 of the printed circuit board is placed on the planar surface 20 of the overmolding. The printed circuit board is therefore placed on the front side of the stator 10. The printed circuit board comprises as many connection holes 30 as the overmolding 18 comprises cavities 22. A spacing in between the connection holes 30 is chosen such that when the printed circuit board is positioned on top of the overmolding 18 with the cavities 22, all connection holes 30 align with one of the cavities 22.

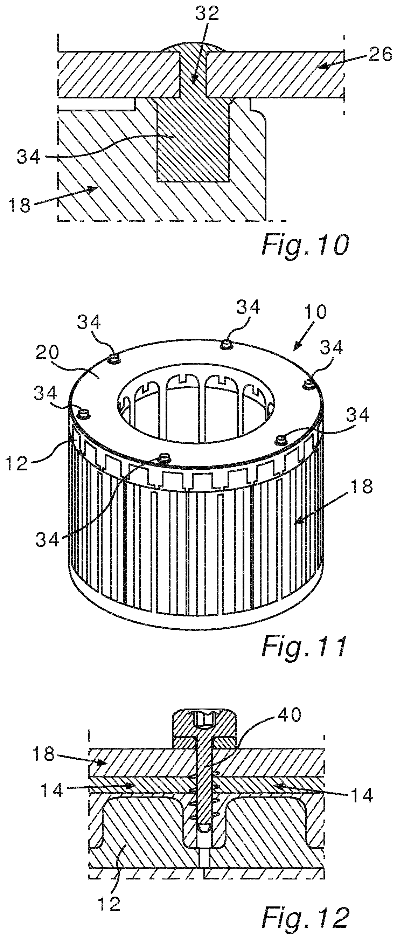

Fig. 9 shows a schematic illustration of a sectional view of a cavity duct 32 formed by the cavity 22 of the overmolding 18 of the stator 10 and the connection hole 30 of the printed circuit board. As can be seen from Fig. 9, a cross-sectional diameter of the cavity 22 can differ from a cross-sectional diameter of the connection hole 30. The cavity duct 32 comprises then different cross-sectional diameters. The cavity 22 extends through to the wire element 14. In a next step, as shown in Fig. 10, the cavity duct 32 is entirely filled with an electrically conductive material 34. For example, the electrically conductive material 34 is first in a fluid state when inserted into the cavity duct 32 and later brought into a solid-state for example by heating-up the stator. For example, the electrically conductive material 34 comprises an electrically conductive silicone.

Fig. 11 shows the stator as in Fig. 4 but filled with an alternative electrically conductive material 34. In this embodiment, the cavities 22 are at first filled with the electrically conductive material 34 which forms a solid connecting piece 38. For example, the electrically conductive material 34 comprises an electrically conductive rubber that is cut into a connecting piece 38 with a predetermined size and shape. The connecting pieces 38 made of rubber can entirely fill the cavity 22. The connecting pieces 38 extend from the wire element 14 outwards the cavity 22, such that the connection holes 30 of the carrier element 26 can be positioned on the connecting pieces 38 in a subsequent step.

Fig. 12 shows a schematic illustration of a sectional view of the cavity duct 32 filled with a self-tapping screw 40. In other words, a metal comprised by the self-tapping screw 40 is used as an electrically conductive material 34. After positioning the carrier element 26 on the overmolding 18, the self-tapping screw 40 is screwed into the overmolding 18 such that the self-tapping screw 40 extends from the wire element 14 through the connection hole 18. A head of the self-tapping screw 40 rests against the surface of the carrier element 26.

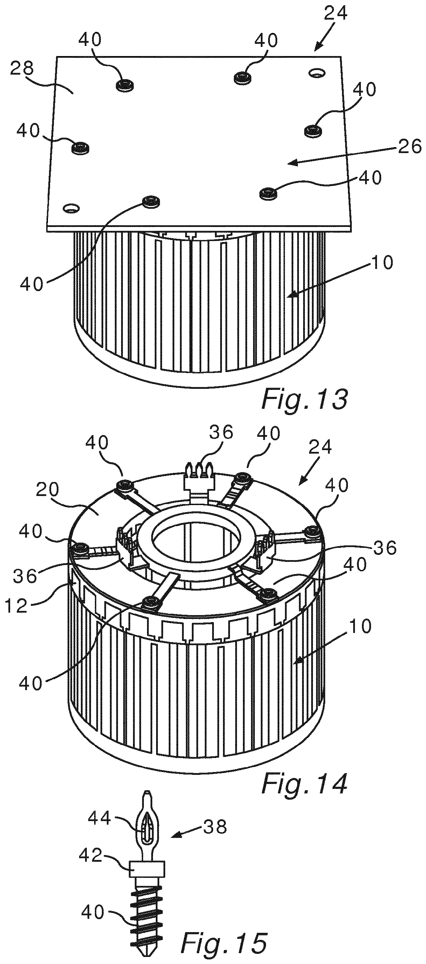

Fig. 13 shows the stator control system 24 where the carrier element 26 is designed as the previously mentioned printed circuit board. The cavities 22 are each filled with a self-tapping screw 40. The self-tapping screws 40 establish an electrical contact between the connection holes 30 of the printed circuit board and the wire element 14 as well as hold the printed circuit board firmly attached to the stator 10.

In Fig. 14, the carrier element 26 is designed as a contact ring instead of as a printed circuit board as in Fig. 13. The contact ring comprises a ring-shaped a body and several extensions extending outwards from the ring-shaped body. The extensions are resting against the planar surface 20 of the overmolding 18. Each extension comprises a connection hole 30 where the self-tapping screw 40 has been screwed through to reach and at least partially disrupt the wire element 14 inside the overmolding 18. The contact ring further comprises here shown three adapters 36 having the function of an electrical connector where an external electricity supply can be plugged in. The contact ring can be entirely made of an electrically conductive material like a metal such that electricity received through the adapters 36 is transferred to the extensions and subsequently to the self-tapping screws 40 and to the wire element 14 inside the overmolding 18.

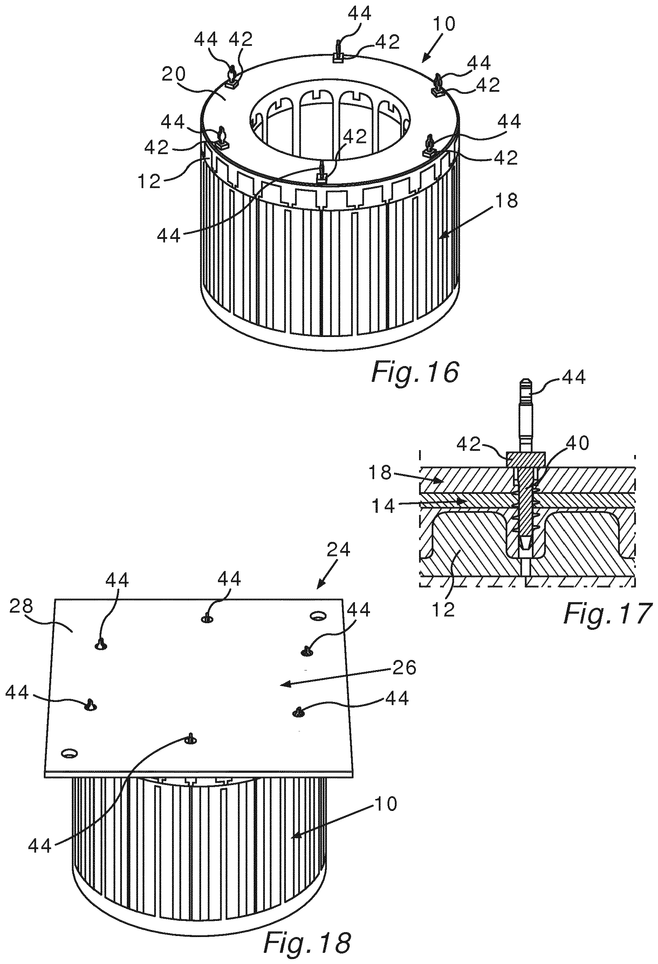

Fig. 15 shows a connecting piece 38 made of the electrically conductive material 34 according to another embodiment of the invention. The connecting piece 38 comprises a self-tapping screw 40 as previously used and described for example in figs. 12, 13 and 14. The self-tapping screw 40 features a tip at one end and at an opposite end a screwing surface 42 where a screw driver or a screw driller can be applied to screw in the self-tapping screw 40. In addition to the screwing surface 42, the self-tapping screw 40 exhibits at its opposite end to the tip a press-fit connector 44. The press-fit connector 44 can be designed as a flat metal sheet. As shown in Fig. 16, the self-tapping screw 40 is screwed into the overmolding 18 such that the screwing surface 42 rests against the planar surface 20 of the overmolding 18 and such that the press-fit connector 44 extends outwards the overmolding 18. Fig. 17 shows a schematic illustration of a sectional view of the cavity duct 32 where the self-tapping screw 40 is inserted into the cavity 22 similar to Fig. 12, but additionally with the press-fit connector 44 attached to the self-tapping screw 40. Alternatively, the self-tapping screw 40 and the press-fit connector 44 form a single connecting piece 38. The press-fit connector 44 extends outwards the cavity 22 and potentially outwards the cavity duct 32 when the carrier element 26 is positioned on the overmolding 18 like shown in Fig. 18. Similar as for the embodiment shown in Fig. 13, the self-tapping screw 40 establishes an electrical contact between a connection hole 30 of the printed circuit board and the wire element 14 as well as firmly holds the printed circuit board attached to the stator 10. Due to the design and shape of the press-fit connector 44, the carrier element 26 can be easily removed and placed back on the stator 10 without removing the self-tapping screw 40.

Overall, the examples show how a carrier element like a printed circuit board or a contact ring can be electrically connected and mechanically attached to a stator of an electrical machine with few simple steps resulting in a simple composition.

### Reference signs

- 10: stator
- 12: stator body
- 14: wire element
- 16: electromagnetic coil
- 17: predetermined section
- 18: overmolding
- 20: planar surface
- 22: cavity
- 24: stator control system
- 26: carrier element
- 28: planar surface
- 30: connection hole
- 32: cavity duct
- 34: electrically conductive material
- 36: adapter
- 38: connecting piece
- 40: self-tapping screw
- 42: screwing surface
- 44: press-fit connector

## Claims

1. Method for electrically connecting a wire element (14) of a stator (10) with a carrier element (26), wherein
- the wire element (14) forms in parts at least one electromagnetic coil (16) which creates an electromagnetic field within the stator (10) when the at least one electromagnetic coil (16) is supplied with an electric current;
- the carrier element (26) comprises at least one electric component which is designed to supply the at least one electromagnetic coil (16) with the electric current when an electrical contact is established between the at least one electric component and the wire element (14);
- the carrier element (26) comprises at least one planar surface (28) and at least one connection hole (30) through the at least one planar surface (28);
**characterized in that**
- the wire element (14) and the stator (10) are at least partially covered by an overmolding (18) such that the overmolding (18) forms at least one planar surface (20);
- at least one cavity (22) is drilled through the at least one planar surface (20) of the overmolding (18) and through the wire element (14) of the stator (10) such that the wire element (14) is at least partially disrupted in at least one predetermined section (17) of the wire element (14);
- the carrier element (26) is positioned on the stator (10) such that the at least one planar surface (28) of the carrier element (26) touches the at least one planar surface (20) formed by the overmolding (18) and such that each of the at least one cavity (22) aligns with one of the at least one connection hole (30) of the carrier element (26) and forms together with the corresponding connection hole (30) one single cavity duct (32);
- each cavity duct (32) is at least partially filled with an electrically conductive material (34);
such that in sum the electrical contact is established between the at least one electric component and the wire element (14) in the at least one predetermined section (17) of the wire element (14) .

2. Method according to claim 1, wherein the at least one electric component is designed to control a flow of the electric current through the at least one electromagnetic coil (16).

3. Method according to one of the precedent claims, wherein the wire element (14) comprises at least two electromagnetic coils (16) and the at least one predetermined section (17) is selected in-between two electromagnetic coils (16).

4. Method according to one of the precedent claims, wherein the electrically conductive material (34) comprises an electrically conductive silicone and the cavity duct (32) is filled entirely with the electrically conductive silicone.

5. Method according to one of the preceding claims, wherein the electrically conductive material (34) comprises an electrically conductive rubber forming a connecting piece (38) which connects the disrupted wire element (14) with the connection hole (30) of the carrier element (26).

6. Method according to one of the preceding claims, wherein the electrically conductive material (34) is provided at least in part by a self-tapping screw (40) which, after positioned into the cavity duct (32), extends from the disrupted wire element (14) to the connection hole (30) of the carrier element (26).

7. Method according to claim 6, wherein the self-tapping screw (40) exhibits a press-fit connector (44) onto which the connection hole (30) of the carrier element (26) is positioned.

8. Method according to one of the preceding claims, wherein the carrier element (26) is designed as a printed circuit board.

9. Method according to one of the preceding claims 1 to 7, wherein the carrier element (26) is designed as a contact ring that provides at least one predefined contact element (36) and a respective electric connection between one of the at least one connection hole (30) and the contact element (36).

10. Stator control system (24) comprising
- a stator (10) for an electromagnetic machine which comprises a wire element (14), wherein the wire element (14) forms in parts at least one electromagnetic coil (16), such that an electromagnetic field is created within the stator (10) when the at least one electromagnetic coil (16) is supplied with an electric current;
- a carrier element (26) comprising at least one electric component designed to supply the at least one electromagnetic coil (16) with the electric current when an electrical contact is established between the at least one electric component and the wire element (14), wherein the carrier element (26) comprises at least planar surface (28) and at least one connection hole (30) through the at least one planar surface (28);
**characterized in that**
- the wire element (14) comprises an at least partial disruption in at least one predetermined section (17) of the wire element (14);
- the stator (10) comprises an overmolding (18) which at least partially covers the stator (10) and the wire element (14) such that the overmolding (18) forms at least one planar surface (20) ;
- the overmolding (18) comprises at least one cavity (22) which extends through the at least one planar surface (20) of the overmolding (18) to the disruption of the wire element (14) in the at least one predetermined section (17);
- the carrier element (26) is positioned on the stator (10) such that the at least one planar surface (28) of the carrier element (26) touches the at least one planar surface (20) formed by the overmolding (18) and such that each of the at least one cavity (22) aligns with one of the at least one connection hole (30) of the carrier element (26) and forms together with the corresponding connection hole (30) one single cavity duct (32);
- each cavity duct (32) is at least partially filled with an electrically conductive material (34) which establishes the electrical contact between the at least one electric component and the wire element (14) in the at least one predetermined section (17) of the wire element (14).

## Patentansprüche

1. Verfahren zum elektrischen Verbinden eines Drahtelements (14) eines Stators (10) mit einem Trägerelement (26), wobei
- das Drahtelement (14) stellenweise mindestens eine elektromagnetische Spule (16) bildet, was ein elektromagnetisches Feld im Stator (10) erzeugt, wenn die mindestens eine elektromagnetische Spule (16) mit einem elektrischen Strom versorgt wird;
- das Trägerelement (26) mindestens ein elektrisches Bauteil aufweist, das ausgelegt ist, die mindestens eine elektromagnetische Spule (16) mit dem elektrischen Strom zu versorgen, wenn ein elektrischer Kontakt zwischen dem mindestens einen elektrischen Bauteil und dem Drahtelement (14) geschaffen wird;
- das Trägerelement (26) mindestens eine ebene Oberfläche (28) und mindestens ein Verbindungsloch (30) durch die mindestens eine ebene Oberfläche (28) aufweist;
**dadurch gekennzeichnet, dass**
- das Drahtelement (14) und der Stator (10) mindestens teilweise durch ein Umgießen (18) abgedeckt sind, derart, dass das Umgießen (18) mindestens eine ebene Oberfläche (20) bildet;
- mindestens ein Hohlraum (22) durch die mindestens eine ebene Oberfläche (20) des Umgießens (18) und durch das Drahtelement (14) des Stators (10) gebohrt ist, derart, dass das Drahtelement (14) in mindestens einem vorgegebenen Abschnitt (17) des Drahtelements (14) mindestens teilweise unterbrochen ist;
- das Trägerelement (26) auf dem Stator (10) positioniert ist, derart, dass die mindestens eine ebene Oberfläche (28) des Trägerelements (26) die mindestens eine ebene Oberfläche (20), die durch das Umgießen (18) gebildet ist, berührt, und derart, dass jeder des mindestens einen Hohlraums (22) auf eines des mindestens einen Verbindungslochs (30) des Trägerelements (26) ausgerichtet ist und gemeinsam mit dem entsprechenden Verbindungsloch (30) einen einzelnen Hohlraumkanal (32) bildet;
- jeder Hohlraumkanal (32) mindestens teilweise mit einem elektrisch leitenden Material (34) gefüllt ist;
derart, dass zusammengefasst der elektrische Kontakt zwischen dem mindestens einen elektrischen Bauteil und dem Drahtelement (14) in dem mindestens einen vorgegebenen Abschnitt (17) des Drahtelements (14) geschaffen wird.

2. Verfahren nach Anspruch 1, wobei das mindestens eine elektrische Bauteil ausgelegt ist, einen Fluss des elektrischen Stroms durch die mindestens eine elektromagnetische Spule (16) zu steuern.

3. Verfahren nach einem der vorhergehenden Ansprüche, wobei das Drahtelement (14) mindestens zwei elektromagnetische Spulen (16) aufweist und der mindestens eine vorgegebene Abschnitt (17) zwischen zwei elektromagnetischen Spulen (16) gewählt ist.

4. Verfahren nach einem der vorhergehenden Ansprüche, wobei das elektrisch leitende Material (34) ein elektrisch leitendes Silikon aufweist und der Hohlraumkanal (32) mit dem elektrisch leitenden Silikon vollständig gefüllt ist.

5. Verfahren nach einem der vorhergehenden Ansprüche, wobei das elektrisch leitende Material (34) einen elektrisch leitenden Gummi aufweist, der ein Verbindungsstück (38) bildet, das das unterbrochene Drahtelement (14) mit dem Verbindungsloch (30) des Trägerelements (26) verbindet.

6. Verfahren nach einem der vorhergehenden Ansprüche, wobei das elektrisch leitende Material (34) mindestens teilweise durch eine selbstschneidende Schraube (40) bereitgestellt wird, die, nachdem sie im Hohlraumkanal (32) positioniert worden ist, vom unterbrochenen Drahtelement (14) zum Verbindungsloch (30) des Trägerelements (26) verläuft.

7. Verfahren nach Anspruch 6, wobei die selbstschneidende Schraube (40) einen Einpressverbinder (44) aufweist, in dem das Verbindungsloch (30) des Trägerelements (26) positioniert wird.

8. Verfahren nach einem der vorhergehenden Ansprüche, wobei das Trägerelement (26) als eine gedruckte Leiterplatte ausgelegt ist.

9. Verfahren nach einem der vorhergehenden Ansprüche 1 bis 7, wobei das Trägerelement (26) als ein Kontaktring, der mindestens ein vorgegebenes Kontaktelement (36) und eine entsprechende elektrische Verbindung zwischen einem des mindestens einen Verbindungslochs (30) und dem Kontaktelement (36) schafft, ausgelegt ist.

10. Statorsteuersystem (24), das Folgendes aufweist:
- einen Stator (10) für eine elektromagnetische Maschine, der ein erstes Drahtelement (14) aufweist, wobei das Drahtelement (14) stellenweise mindestens eine elektromagnetische Spule (16) bildet, derart, dass ein elektromagnetisches Feld im Stator (10) erzeugt wird, wenn die mindestens eine elektromagnetische Spule (16) mit einem elektrischen Strom versorgt wird;
- ein Trägerelement (26), das mindestens ein elektrisches Bauteil aufweist, das ausgelegt ist, die mindestens eine elektromagnetische Spule (16) mit dem elektrischen Strom zu versorgen, wenn ein elektrischer Kontakt zwischen dem mindestens einen elektrischen Bauteil und dem Drahtelement (14) geschaffen wird, wobei das Trägerelement (26) mindestens eine ebene Oberfläche (28) und mindestens ein Verbindungsloch (30) durch die mindestens eine ebene Oberfläche (28) aufweist;
**dadurch gekennzeichnet, dass**
- das Drahtelement (14) eine mindestens teilwiese Unterbrechung in mindestens einem vorgegebenen Abschnitt (17) des Drahtelements (14) aufweist;
- der Stator (10) eine Umgießung (18) aufweist, die den Stator (10) und das Drahtelement (14) mindestens teilweise abdeckt, derart, dass die Umgießung (18) mindestens eine ebene Oberfläche (20) bildet;
- die Umgießung (18) mindestens einen Hohlraum (22) aufweist, der durch die mindestens eine ebene Oberfläche (20) der Umgießung (18) zur Unterbrechung des Drahtelements (14) im mindestens einen vorgegebenen Abschnitt (17) verläuft;
- das Trägerelement (26) auf dem Stator (10) positioniert ist, derart, dass die mindestens eine ebene Oberfläche (28) des Trägerelements (26) die mindestens eine ebene Oberfläche (20), die durch die Umgießung (18) gebildet ist, berührt, und derart, dass jeder des mindestens einen Hohlraums (22) auf eines des mindestens einen Verbindungslochs (30) des Trägerelements (26) ausgerichtet ist und gemeinsam mit dem entsprechenden Verbindungsloch (30) einen einzelnen Hohlraumkanal (32) bildet;
- jeder Hohlraumkanal (32) mindestens teilweise mit einem elektrisch leitenden Material (34) gefüllt ist, das den elektrischen Kontakt zwischen dem mindestens einen elektrischen Bauteil und dem Drahtelement (14) im mindestens einen vorgegebenen Abschnitt (17) des Drahtelements (14) schafft.

## Revendications

1. Procédé pour connecter électriquement un élément filaire (14) d'un stator (10) à un élément de support (26), dans lequel
- l'élément filaire (14) constitue en partie au moins une bobine électromagnétique (16) qui crée un champ électromagnétique à l'intérieur du stator (10) lorsque ladite au moins une bobine électromagnétique (16) est alimentée en courant électrique ;
- l'élément de support (26) comprend au moins un composant électrique qui est conçu pour alimenter ladite au moins une bobine électromagnétique (16) en courant électrique quand un contact électrique est établi entre ledit au moins un composant électrique et l'élément filaire (14) ;
- l'élément de support (26) comprend au moins une surface plane (28) et au moins un trou de connexion (30) à travers ladite au moins une surface plane (28) ;
**caractérisé en ce que**
- l'élément filaire (14) et le stator (10) sont au moins partiellement couverts par un surmoulage (18) de sorte que le surmoulage (18) constitue au moins une surface plane (20) ;
- au moins une cavité (22) est percée à travers ladite au moins une surface plane (20) du surmoulage (18) et à travers l'élément filaire (14) du stator (10) de sorte que l'élément filaire (14) est au moins partiellement rompu dans au moins une section prédéterminée (17) de l'élément filaire (14) ;
- l'élément de support (26) est positionné sur le stator (10) de telle sorte que ladite au moins une surface plane (28) de l'élément de support (26) touche ladite au moins une surface plane (20) formée par le surmoulage (18) et de sorte que chacune de ladite au moins une cavité (22) s'aligne sur l'un dudit au moins un trou de connexion (30) de l'élément de support (26) et constitue avec le trou de connexion correspondant (30) un seul passage de cavité (32) ;
- chaque passage de cavité (32) est au moins partiellement rempli d'un matériau électroconducteur (34) ;
de sorte qu'en fin de compte le contact électrique est établi entre ledit au moins un composant électrique et l'élément filaire (14) dans ladite au moins une section prédéterminée (17) de l'élément filaire (14).

2. Procédé selon la revendication 1, dans lequel ledit au moins un composant électrique est conçu pour réguler un flux du courant électrique à travers ladite au moins une bobine électromagnétique (16).

3. Procédé selon l'une quelconque des revendications précédentes, dans lequel l'élément filaire (14) comprend au moins deux bobines électromagnétiques (16) et ladite au moins une section prédéterminée (17) est sélectionnée entre deux bobines électromagnétiques (16).

4. Procédé selon l'une quelconque des revendications précédentes, dans lequel le matériau électroconducteur (34) comprend de la silicone électroconductrice et le passage de cavité (32) est rempli entièrement avec la silicone électroconductrice.

5. Procédé selon l'une quelconque des revendications précédentes, dans lequel le matériau électroconducteur (34) comprend du caoutchouc électroconducteur constituant une pièce de connexion (38) qui connecte l'élément filaire rompu (14) au trou de connexion (30) de l'élément de support (26).

6. Procédé selon l'une quelconque des revendications précédentes, dans lequel le matériau électroconducteur (34) est fourni au moins en partie par une vis autotaraudeuse (40) qui, après avoir été positionnée dans le passage de cavité (32), s'étend de l'élément filaire rompu (14) au trou de connexion (30) de l'élément de support (26).

7. Procédé selon la revendication 6, dans lequel la vis autotaraudeuse (40) présente un connecteur à insertion (44) sur lequel est positionné le trou de connexion (30) de l'élément de support (26).

8. Procédé selon l'une quelconque des revendications précédentes, dans lequel l'élément de support (26) est conçu sous forme de carte de circuit imprimé.

9. Procédé selon l'une quelconque des revendications précédentes 1 à 7, dans lequel l'élément de support (26) est conçu sous la forme d'une bague de contact qui fournit au moins un élément de contact prédéfini (36) et une connexion électrique respective entre l'un dudit au moins un trou de connexion (30) et l'élément de contact (36).

10. Système de commande de stator (24), comprenant
- un stator (10) pour une machine électromagnétique qui comprend un élément filaire (14), l'élément filaire (14) constituant en partie au moins une bobine électromagnétique (16), de sorte qu'un champ électromagnétique est créé à l'intérieur du stator (10) quand ladite au moins une bobine électromagnétique (16) est alimentée en courant électrique ;
- un élément de support (26) comprenant au moins un composant électrique conçu pour alimenter ladite au moins une bobine électromagnétique (16) en courant électrique quand un contact électrique est établi entre ledit au moins un composant électrique et l'élément filaire (14), l'élément de support (26) comprenant au moins une surface plane (28) et au moins un trou de connexion (30) à travers ladite au moins une surface plane (28) ;
**caractérisé en ce que**
- l'élément filaire (14) comprend une rupture au moins partielle dans au moins une section prédéterminée (17) de l'élément filaire (14) ;
- le stator (10) comprend un surmoulage (18) qui couvre au moins partiellement le stator (10) et l'élément filaire (14) de sorte que le surmoulage (18) constitue au moins une surface plane (20) ;
- le surmoulage (18) comprend au moins une cavité (22) qui s'étend à travers ladite au moins une surface plane (20) du surmoulage (18) jusqu'à la rupture de l'élément filaire (14) dans ladite au moins une section prédéterminée (17) ;
- l'élément de support (26) est positionné sur le stator (10) de sorte que ladite au moins une surface plane (28) de l'élément de support (26) touche ladite au moins une surface plane (20) constituée par le surmoulage (18) et de sorte que chacune de ladite au moins une cavité (22) s'aligne sur l'un dudit au moins un trou de connexion (30) de l'élément de support (26) et constitue avec le trou de connexion correspondant (30) un seul passage de cavité (32) ;
- chaque passage de cavité (32) est au moins partiellement rempli d'un matériau électroconducteur (34) établissant le contact électrique entre ledit au moins un composant électrique et l'élément filaire (14) dans ladite au moins une section prédéterminée (17) de l'élément filaire (14).
